# EUROPEAN PATENT APPLICATION

(11) **EP 4 560 798 A1**
(43) Date of publication of application: **28.05.2025**
(21) Application number: 22956091.7
(22) Date of filing: 26.08.2022
(51) Int. Cl.: H01M 50/15, H01M 50/176

(54) **TOP COVER ASSEMBLY, BATTERY CELL, BATTERY, AND ELECTRIC APPARATUS**

(71) Applicant: Contemporary Amperex Technology Co., Limited, Ningde, Fujian 352100 (CN)
(72) Inventor: TONG, Huaqiao, Ningde, Fujian 352100 (CN); LI, Yongfa, Ningde, Fujian 352100 (CN)
(74) Representative: Frick, Robert
(86) International application number: PCT/CN2022/114973
(87) International publication number: WO 2024/040545

(57) **Abstract**

The present application relates to a top cover assembly , a battery cell , a battery , and an electrical apparatus. The top cover assembly includes: a top cover body (211); and a structural member arranged on the top cover body (211); where in a thickness direction (a) of the top cover body (211), an upper surface of the structural member is flush with an upper surface of the top cover body (211), or the upper surface of the structural member is lower than the upper surface of the top cover body (211), or the upper surface of the structural member is higher than the upper surface of the top cover body (211) and a height difference is within a preset range. The present application sinks the structural member into the interior of the top cover assembly (21), and by improving a spatial structure of the top cover assembly (21), it assists in improving the spatial utilization rate after battery cells (20) are assembled into a battery, thereby improving the overall volumetric energy density of the battery.

## Description

### TECHNICAL FIELD

The present application relates to the field of battery technologies, and particularly relates to a top cover assembly, a battery cell, a battery, and an electrical apparatus.

### BACKGROUND

With the rapid development of new-energy technologies, batteries have been applied to increasingly more fields. As application fields of batteries continue to expand, people require batteries to have higher volumetric energy density to meet higher usage requirements.

However, at present, a structure of a battery cell is still not fully saturated, and therefore, after the battery cells are assembled into a battery, the space utilization of the battery is low, thereby resulting in a low overall volumetric energy density of the battery.

### SUMMARY OF THE INVENTION

Based on this, the present application provides a top cover assembly, a battery cell, a battery, and an electrical apparatus, which, by improving a spatial structure of the top cover assembly, is capable of helping improve an overall volumetric energy density of a battery after battery cells are assembled into the battery.

In a first aspect, the present application provides a top cover assembly, the top cover assembly including:
a top cover body; and
a structural member arranged on the top cover body;
where in a thickness direction of the top cover body, an upper surface of the structural member is flush with an upper surface of the top cover body, or the upper surface of the structural member is lower than the upper surface of the top cover body, or the upper surface of the structural member is higher than the upper surface of the top cover body and a height difference is within a preset range.

Compared with a top cover assembly in the related art in which a structural member protrudes too much from an upper surface of a top cover body, in the technical solution of the embodiment of the present application, the upper surface of the structural member is flush with the upper surface of the top cover body, which is capable of eliminating the influence of the structural member on the overall thickness of the top cover assembly, and can more effectively utilize the space above the upper surface of the structural member, thereby improving the space utilization rate. By improving the spatial structure of the top cover assembly, it is capable of helping improve the utilization efficiency of the external space after the battery cells are assembled into a battery, thereby improving the overall volumetric energy density of the battery. In the case where the upper surface of the structural member and the upper surface of the top cover body are lower than the upper surface of the top cover body, the space above the upper surface of the structural member can also be better utilized, thereby improving the space utilization. In addition, in the case where the upper surface of the structural member is lower than the upper surface of the top cover body, an accommodating recess may be formed to further accommodate other external electrical connection structural members, which is beneficial to further assist in improving the utilization efficiency of the external space after the battery cells are assembled into the battery, thereby improving the overall volumetric energy density of the battery. When the upper surface of the structural member is higher than the upper surface of the top cover body, the height difference is controlled within a smaller preset range, so that the height of the structural member protruding from the upper surface of the top cover body can be ignored, which is also capable of improving the utilization efficiency of the external space of the battery cells equipped with the top cover assembly after the battery is assembled. In summary, in the technical solution of the embodiment of the present application, when the top cover assembly, the shell, and an electrode assembly together constitute a battery cell, the utilization rate of the space above the upper surface of the structural member is capable of being improved by improving the spatial structure of the top cover assembly, thereby assisting in improving the overall volumetric energy density of the battery after the battery cells are assembled into the battery.

In some embodiments, an accommodating groove is opened on the top cover body, and the structural member includes a terminal post assembling body, and the terminal post assembling body is accommodated in the accommodating groove;
where in a thickness direction of the top cover body, an upper surface of the terminal post assembling body is flush with the upper surface of the top cover body, or the upper surface of the terminal post assembling body is lower than the upper surface of the top cover body, or the upper surface of the terminal post assembling body is higher than the upper surface of the top cover body and a height difference is within a preset range.

In the technical solution of the embodiment of the present application, the terminal post assembling body is accommodated in the accommodating groove so that in the thickness direction of the top cover body, the upper surface of the terminal post assembling body is flush with the upper surface of the top cover body or lower than the upper surface of the top cover body, or the height difference of the terminal post assembling body protruding from the upper surface of the top cover body is controlled within a preset range, and therefore, by improving the spatial structure of the top cover assembly, when the top cover assembly, the shell, and the electrode assembly together form a battery cell, the utilization rate of the space above the upper surface of the terminal post assembling body is improved, thereby assisting in improving the overall volumetric energy density of the battery after the battery cells are assembled into the battery.

In some embodiments, when the upper surface of the terminal post assembling body is flush with the upper surface of the top cover body or lower than the upper surface of the top cover body, the height difference between the upper surface of the terminal post assembling body and the upper surface of the top cover body in the thickness direction of the top cover body is -3 mm to 0 mm.

In the technical solution of the embodiment of the present application, the height difference between the upper surface of the terminal post assembling body and the upper surface of the top cover body is set to -3 mm to 0 mm, so that the terminal post assembling body is capable of sinking smoothly into the top cover body without occupying too much space inside the top cover body.

In some embodiments, the height difference between the upper surface of the terminal post assembling body and the upper surface of the top cover body in the thickness direction of the top cover body is -2 mm to 0 mm.

In the technical solution of the embodiment of the present application, the height difference between the upper surface of the terminal post assembling body and the upper surface of the top cover body is set to -2 mm to 0 mm. Even if the upper surface of the terminal post assembling body is lower than the upper surface of the top cover body or is flush with the upper surface of the top cover body, the terminal post assembling body is capable of smoothly sinking into the top cover assembly. When the top cover assembly, the shell, and the electrode assembly together form a battery cell, the space above the upper surface of the terminal post assembling body can be better utilized, thereby improving space utilization. Moreover, the upper surface of the terminal post assembling body is lower than the upper surface of the top cover body to form an accommodating recess for accommodating other external electrical connection structural members, which is conducive to further assisting in improving the utilization efficiency of the external space after the battery cells are assembled into the battery, thereby improving the overall volumetric energy density of the battery.

In some embodiments, the terminal post assembling body includes:
a terminal post body;
a first insulating member, the first insulating member surrounding the outer periphery of the terminal post body; and
a connecting ring, the connecting ring surrounding the outer periphery of the first insulating member and connected between the first insulating member and a groove inner wall of the accommodating groove.

In the technical solution of the embodiment of the present application, through the structural coordination between the terminal post body, the first insulating member, and the connecting ring, on the one hand, the terminal post assembling body is capable of being safely and stably arranged on the top cover body, and on the other hand, the space above the upper surface of the terminal post assembling body is capable of being more effectively utilized, thereby improving the space utilization rate, which is beneficial to assist in improving the utilization efficiency of the external space after the battery cells are assembled into the battery, thereby improving the overall volumetric energy density of the battery.

In some embodiments, the connecting ring is connected to the groove inner wall of the accommodating groove by welding.

In the technical solution of the embodiment of the present application, the connecting ring and the groove inner wall of the accommodating groove are welded to form an integrated structure, so that the arrangement of the terminal post assembling body in the accommodating groove is more stable.

In some embodiments, the top cover body includes a top cover plate and a second insulating member stacked in its own thickness direction, an accommodating groove is opened on the top cover plate, and a first through hole is opened on a groove bottom wall of the accommodating groove; a second through hole in communication with the first through hole is opened on the second insulating member, and when the terminal post body is accommodated in the accommodating groove, one end of the terminal post body sequentially passes through the first through hole and the second through hole.

In the technical solution of the embodiment of the present application, when the top cover assembly, the shell, and the electrode assembly together form a battery cell, the second insulating member is capable of isolating the electrical connection components in the shell from the top cover plate, thereby reducing the short circuit risk of the battery cell.

In some embodiments, the top cover assembly further includes an adapter plate, the adapter plate is arranged on a side of the second insulating member away from the top cover plate, and the adapter plate is configured to connect the terminal post body and the electrode assembly.

In the technical solution of the embodiment of the present application, by providing the adapter plate, the terminal post body is capable of being stably connected to the electrode assembly in the shell of the battery cell. Therefore, in charging and discharging processes of the battery cell, a positive electrode active material and a negative electrode active material react with an electrolyte solution, thereby forming a stable current loop between the electrode assembly and the terminal post body.

In some embodiments, the thickness of the adapter plate is the same everywhere.

In the technical solution of the embodiment of the present application, the structural setting of the above adapter plate is not only capable of achieving a stable connection between the electrode assembly and the terminal post body, but also capable of reducing the space occupied by the adapter plate inside the battery cell, thereby improving the space utilization inside the battery cell.

In some embodiments, the top cover assembly further includes a first sealing member, and the first sealing member is arranged between the terminal post assembling body and the second insulating member in the thickness direction of the top cover body.

In the technical solution of the embodiment of the present application, on the one hand, the first sealing member is filled in a gap between the terminal post assembling body and the second insulating member. When the top cover assembly covers the opening of the shell of the battery cell, the first sealing member is capable of improving the sealing performance inside the shell, so that the electrode assembly is capable of being more safely sealed in the shell. On the other hand, the first sealing member is filled between the terminal post assembling body and the second insulating member in the thickness direction of the top cover body, thereby providing stable support for the terminal post assembling body in the thickness direction of the top cover body and improving the stability of the terminal post assembling body on the top cover body.

In some examples, the first sealing member is an elastic sealing member.

In the technical solution of the embodiment of the present application, when the first sealing member is elastic, the first sealing member can be interference-fitted between the terminal post assembling body and the second insulating member, thereby improving the sealing performance between the terminal post assembling body and the second insulating member.

In some embodiments, an exhaust vent is further opened on the top cover body, and the structural member further includes a pressure relief member, and the pressure relief member is sealed in the exhaust vent;
where in the thickness direction of the top cover body, an upper surface of the pressure relief member is flush with the upper surface of the top cover body, or the upper surface of the pressure relief member is lower than the upper surface of the top cover body, or the upper surface of the pressure relief member is higher than the upper surface of the top cover body and a height difference is within a preset range.

In the technical solution of the embodiment of the present application, when the top cover assembly, the shell, and the electrode assembly together form a battery cell, the pressure relief member can achieve pressure relief inside the battery cell when thermal runaway occurs inside the battery cell, thereby avoiding explosion of the battery cell. The pressure relief member is accommodated in the exhaust vent so that in the thickness direction of the top cover body, the upper surface of the pressure relief member is flush with the upper surface of the top cover body or lower than the upper surface of the top cover body, or the height difference of the pressure relief member protruding from the upper surface of the top cover body is controlled within a preset range, and therefore, the space saved above the upper surface of the pressure relief member is capable of being more effectively utilized, thereby improving the space utilization, which is conducive to assisting in improving the utilization efficiency of the external space after the battery cells are assembled into the battery, thereby improving the overall volumetric energy density of the battery.

In some embodiments, a liquid injection hole is further opened on the top cover body, the structural member further includes a second sealing member, and the second sealing member is sealed in the liquid injection hole;
where in the thickness direction of the top cover body, an upper surface of the second sealing member is flush with the upper surface of the top cover body, or the upper surface of the second sealing member is lower than the upper surface of the top cover body, or the upper surface of the second sealing member is higher than the upper surface of the top cover body and a height difference is within a preset range.

In the technical solution of the embodiment of the present application, when the top cover assembly, the shell, and the electrode assembly together form a battery cell, liquid can be injected into the battery cell through the liquid injection hole, and the liquid injection hole is sealed by the second sealing member to ensure the normal operation of the battery cell. Therefore, the second sealing member is completely accommodated in the liquid injection hole so that in the thickness direction of the top cover body, the upper surface of the second sealing member is flush with the upper surface of the top cover body or lower than the upper surface of the top cover body, or the height difference of the second sealing member protruding from the upper surface of the top cover body is controlled within a preset range, and therefore, the space saved above the upper surface of the second sealing member is capable of being more effectively utilized, thereby improving the space utilization, which is conducive to assisting in improving the utilization efficiency of the external space after the battery cells are assembled into the battery, thereby improving the overall volumetric energy density of the battery. As for the top cover assembly that is simultaneously provided with a terminal post assembling body, a pressure relief member, and a second sealing member, the above arrangement can more effectively and comprehensively compress the thicknesses of different positions of the top cover assembly, thereby improving the efficiency of utilizing the external space after the battery cells are assembled into the battery, and improving the overall volumetric energy density of the battery.

In some embodiments, the preset range is 0 mm to 3 mm.

In the technical solution of the embodiment of the present application, the preset range is small, and therefore, the height of the structural member protruding from the upper surface of the top cover body is small, and the impact on the overall thickness of the top cover assembly is small, which, to some extent, is capable of reducing the thickness of the top cover assembly at the corresponding position, thereby being conducive to improving the utilization efficiency of the external space after the battery cells are assembled into the battery, and improving the overall volumetric energy density of the battery.

In some embodiments, the preset range is 0 mm to 2 mm.

In the technical solution of the embodiment of the present application, the preset range is further narrowed, which is capable of further improving the utilization of the space above the upper surface of the structural member.

In a second aspect, the present application provides a battery cell, including:
a shell having an opening;
the above-mentioned top cover assembly arranged at the opening in a sealed manner; and
an electrode assembly accommodated in the shell and connected to the top cover assembly.

In a third aspect, the present application provides a battery, including the above-mentioned battery cell.

In a fourth aspect, the present application provides an electrical apparatus, including the above-mentioned battery.

The top cover assembly, the battery cell, the battery, and the electrical apparatus cause the structural member on the top cover body to sink in the thickness direction of the top cover assembly, thereby reducing the thickness of the top cover assembly at the corresponding position. Therefore, when the top cover assembly is arranged at the opening of the shell in a sealed manner to form a battery cell, it is beneficial to improve the utilization efficiency of the external space after the battery cells are assembled into a battery, so as to utilize the saved space to arrange other external structural members, thereby effectively improving the overall volumetric energy density of the battery.

The above illustrations are merely brief descriptions for the technical solutions of the present application. Specific implementation manners of the present application are described specifically in the following to understand the technical solutions of the present application more clearly and implement the present application according to content of the specification, and to make the above and other objectives, features and advantages of the present application more comprehensible.

### BRIEF DESCRIPTION OF DRAWINGS

Various other advantages and benefits will become apparent to those of ordinary skill in the art upon reading the following detailed description of the implementations. The drawings are for the purpose of illustrating the preferred implementations only and are not to be considered a limitation to the present application. Furthermore, in all the drawings, the same reference numerals represent the same components. In the drawings:
Fig. 1 is a schematic structural diagram of a vehicle according to an embodiment of the present application;
Fig. 2 is a schematic exploded structural diagram of a battery according to an embodiment of the present application;
Fig. 3 is a schematic exploded structural diagram of a battery cell according to an embodiment of the present application;
Fig. 4 is a schematic diagram of an overall structure of a battery cell according to an embodiment of the present application;
Fig. 5 is a front view of a battery cell according to an embodiment of the present application;
Fig. 6 is a schematic exploded structural diagram of a top cover assembly according to an embodiment of the present application;
Fig. 7 is a schematic planar diagram of a top cover assembly according to an embodiment of the present application;
Fig. 8 is a schematic sectional diagram of a top cover assembly according to an embodiment of the present application;
Fig. 9 is a schematic sectional diagram of a top cover assembly according to another embodiment of the present application; and
Fig. 10 is a schematic sectional diagram of a top cover assembly according to another embodiment of the present application.

Description of reference numerals: 1000. Vehicle; 100. Battery; 200. Controller; 300. Motor; 10. Box body; 20. Battery cell; 11. First part; 12. Second part; 21. Top cover assembly; 22. Shell; 23. Electrode assembly; 211. Top cover body; 212. Terminal post assembling body; 213. Adapter plate; 214. First sealing member; 215. Pressure relief member; 2111. Accommodating groove; 2112. Top cover plate; 2113. Second insulating member; 2114. First through hole; 2115. Second through hole; 2116. Exhaust vent; 2117. Liquid injection hole; 2121. Terminal post body; 2122. First insulating member; 2123. Connecting ring; a. Thickness direction.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to two or more (including two). Similarly, "multiple groups" refers to two or more groups (including two groups), and "multiple pieces" refers to two or more pieces (including two pieces).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. As the application fields of power batteries continue to expand, their market demand is also constantly expanding.

In order to meet higher battery usage requirements, it is necessary to continuously improve the space utilization of the battery, thereby increasing the volumetric energy density of the battery. In a battery structure, a battery cell is the smallest unit that makes up a battery. The magnitude of the volume of the battery cell will affect the quantity of battery cells that can be accommodated in the battery, thereby affecting the volumetric energy density of the battery.

The inventors have noticed that in a current battery cell structure, on the one hand, a terminal post structure on a top cover assembly protrudes from an upper surface of the top cover assembly, and the protruding terminal post structure increases the overall height of the battery cell and reduces the volumetric energy density of the battery cell. On the other hand, when an electrode assembly is accommodated in a shell and the top cover assembly is arranged at an opening of the shell in a sealed manner, there is a certain gap between a top end of the electrode assembly and the terminal post structure on the top cover assembly. When the electrode assembly and the terminal post structure are connected via an adapter plate, in order to improve the connection stability between the two, a protrusion needs to be arranged on the adapter plate to prevent the electrode assembly from shaking inside the shell after connection, thereby causing connection failure. Therefore, the arrangement of the protrusions causes the adapter plate to occupy a large space, thereby reducing the space utilization inside the battery cell.

In addition, the inventors have also discovered that for a current battery cell in which the terminal post structure protrudes from the upper surface of the top cover assembly, on the one hand, in the manufacturing process of the battery cell, the terminal post structure protruding from the upper surface of the top cover assembly is prone to risks such as bumps, thereby causing structural damage to the battery cell. Furthermore, when two or more battery cells are brought together, the protruding terminal post structure on one battery cell is more likely to contact with the protruding terminal post structure on another battery cell, thereby causing the risk of short circuit of the terminal post.

On the other hand, when battery cells are assembled into a battery, a bus needs to be arranged on the terminal post structure of each battery cell, and the bus needs to be connected to a Flexible Printed Circuit Board (FPC) of a built-in circuit to achieve connection and sampling between the battery cells. In addition, the flexible printed circuit board is arranged on the upper surface of the top cover assembly.

Specifically, aluminum wires or nickel sheets are usually used for connection. When the aluminum wires are used for connection, the terminal post protruding from the upper surface of the top cover assembly makes the aluminum wire easy to bend in the connection process and is relatively long, which reduces the connection and sampling reliability between the battery cells. When the nickel sheets are used for connection, the nickel sheets are in a tilted state, which can also easily lead to reduced connection and sampling reliability between battery cells.

Based on the above considerations, in order to solve the problems of low space utilization and volumetric energy density of the battery cell, the inventors have designed a top cover assembly after in-depth research. By completely accommodating a terminal post assembling body in an accommodating groove, the terminal post assembling body sinks to the interior of the top cover assembly and the battery cell, thereby forming a terminal post-free top cover assembly, and further improving the space utilization inside the battery cell.

The battery cell disclosed in embodiment of the present application can be used in, but is not limited to, an electrical apparatus such as a vehicle, a ship, or an aircraft.

An embodiment of the present application provides an electrical apparatus using a battery as a power source. The electrical apparatus may be, but is not limited to, a mobile phone, a tablet, a laptop, an electric toy, an electric tool, a battery cart, an electric vehicle, a ship, a spacecraft, and the like. The electric toy may include fixed or mobile electric toys, such as game consoles, electric vehicle toys, electric ship toys, and electric airplane toys. The spacecraft may include airplanes, rockets, space shuttles, spaceships, etc.

For the convenience of description in the following embodiments, an electrical apparatus being a vehicle 1000 according to an embodiment of the present application is taken as an example for the description.

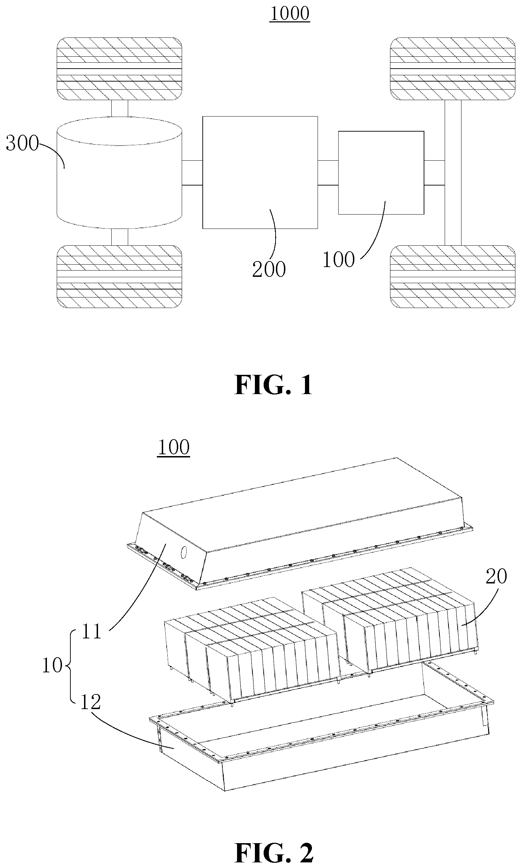

Referring to Fig. 1, Fig. 1 is a schematic structural diagram of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to Fig. 2, Fig. 2 is an exploded diagram of a battery 100 according to some embodiments of the present application. The battery 100 includes a box body 10 and a battery cell 20, the battery cell 20 being accommodated within the box body 10. The box body 10 is used to provide an accommodating space for the battery cell 20, and the box body 10 can be of various structures. In some embodiments, the box body 10 may include a first part 11 and a second part 12, the first part 11 and the second part 12 covering each other, and the first part 11 and the second part 12 together defining the accommodating space for accommodating the battery cell 20. The second part 12 may be of a hollow structure with an opening at one end, and the first part 11 may be of a plate-like structure, where the first part 11 covers the opening side of the second part 12 so that the first part 11 and the second part 12 together define the accommodation space. The first part 11 and the second part 12 may each be of a hollow structure with an opening at one end, where the opening side of the first part 11 covers the opening side of the second part 12. Of course, the box body 10 formed by the first part 11 and the second part 12 may be of a variety of shapes, such as a cylinder and a rectangular solid.

In the battery 100, there may be a plurality of battery cells 20, and the plurality of battery cells 20 may be connected in series or in parallel or in parallel-series, where the parallel-series connection means that the plurality of battery cells 20 are connected in both series and parallel. The plurality of battery cells 20 may be directly connected together in series or in parallel or in parallel-series, and then the whole composed of the plurality of battery cells 20 may be accommodated in the box body 10. Of course, the battery 100 may also be in the form of a battery module first formed by the plurality of battery cells 20 being connected in series or in parallel or in parallel-series, then the plurality of battery modules may be connected in series or in parallel or in parallel-series to form a whole, and accommodated in the box body 10. The battery 100 may further include other structures, for example, the battery 100 may further include a bus component configured to realize electrical connections between the plurality of battery cells 20.

Each battery cell 20 may be a secondary battery or a primary battery; or it may be a lithium-sulfur battery, a sodium-ion battery or a magnesium-ion battery, but is not limited thereto. The battery cell 20 may be in the shape of a cylinder, a flat body, a cuboid or others.

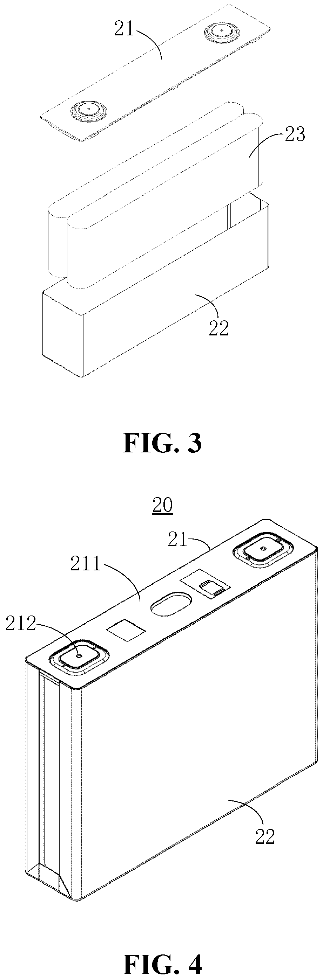

Referring to Fig. 3, and Fig. 3 is a schematic exploded structural diagram of a battery cell 20 according to some embodiments of the present application. The battery cell 20 refers to the smallest unit constituting a battery. As shown in Fig. 3, the battery cell 20 includes an end cover, a shell 22, an electrode assembly 23, and other functional components.

The end cover refers to a component that covers the opening of the shell 22 to isolate an internal environment of the battery cell 20 from an external environment. Without limitation, the shape of the end cover may be adaptive to the shape of the shell 22 so as to be matched with the shell 22. Optionally, the end cover may be made of a material (such as aluminum alloy) with a certain hardness and strength, and in this way, the end cover is not easily deformed when being subjected to extrusion and collisions, such that the battery cell 20 is capable of having a higher structural strength, and the safety performance can also be improved. A functional component such as an electrode terminal can be arranged on the end cover. The electrode terminal may be configured to be electrically connected to the electrode assembly 23, for outputting or inputting electric energy of the battery cell 20. In some embodiments, the end cover may be further provided with a pressure relief mechanism configured to relief an internal pressure when the internal pressure or temperature of the battery cell 20 reaches a threshold. The end cover may be made of various materials, such as copper, iron, aluminum, stainless steel, aluminum alloy, and plastic. This is not specially limited in the embodiments of the present application. In some embodiments, an insulating member may be further arranged on an inner side of the end cover, and the insulating member may be configured to isolate an electrical connection component in the shell 22 from the end cover, thereby reducing the risk of short circuit. For example, the insulating member may be made of plastic, rubber, and the like.

The shell 22 is an assembly configured to match the end cover to form the internal environment of the battery cell 20. The formed internal environment may be configured to accommodate the electrode assembly 23, an electrolytic solution, and other components. The shell 22 and the end cover may be separate components, an opening may be formed in the shell 22, and the end cover covers the opening to form the internal environment of the battery cell 20. Without limitation, the end cover and the shell 22 may also be integrated. Specifically, the end cover and the shell 22 may form a common connection surface before other components enter the shell. When the interior of the shell 22 is required to be encapsulated, the shell 22 is covered with the end cover. The shell 22 may be of various shapes and sizes, such as a cuboid, a cylinder, and a hexagonal prism. Specifically, the shape of the shell 22 may be determined according to the specific shape and size of the electrode assembly 23. The shell 22 may be made of various materials, such as copper, iron, aluminum, stainless steel, aluminum alloy, and plastic. This is not specially limited in the embodiments of the present application.

The electrode assembly 23 is a component of a battery cell 100 where an electrochemical reaction occurs. One or more electrode assemblies 23 may be included within the shell 22. The electrode assembly 23 is mainly formed by winding or stacking a positive electrode plate and a negative electrode plate, and a separator is usually arranged between the positive electrode plate and the negative electrode plate. The portions, with active materials, of the positive electrode plate and the negative electrode plate constitute a main body part of a battery cell assembly, and the portions, without the active materials, of the positive electrode plate and the negative electrode plate respectively constitute tabs. The positive tab and the negative tab may be located at one end of the main body part together or located at two ends of the main body part respectively. In charging and discharging processes of the battery, the positive electrode active material and the negative electrode active material react with the electrolyte solution, and the tabs are connected to the electrode terminals to form a current loop.

According to some embodiments of the present application, reference is made to Fig. 4, Fig. 5, and Fig. 6. The present application provides a top cover assembly 21. The top cover assembly 21 includes a top cover body 211 and a structural member arranged on the top cover body 211. In a thickness direction a of the top cover body 211, an upper surface of the structural member is flush with an upper surface of the top cover body 211, or the upper surface of the structural member is lower than the upper surface of the top cover body 211, or the upper surface of the structural member is higher than the upper surface of the top cover body 211 and a height difference is within a preset range, so that the upper surface of the structural member slightly protrudes from the upper surface of the top cover body 211.

It should be noted that the thickness direction a of the top cover body 211 refers to a direction parallel to the height of the battery cell 20 when the top cover assembly 211 covers the opening of the shell 22 of the battery cell 20. The upper surface of the structural member refers to a plane where the highest point of the structural member on the side away from the shell 22 of the battery cell 20 is located when the top cover assembly 21 covers the opening of the shell 22 of the battery cell 20. The upper surface of the top cover body 211 refers to a plane where the highest point of the top cover body 211 on the side away from the shell 22 of the battery cell 20 is located when the top cover assembly 21 covers the opening of the shell 22 of the battery cell 20.

It is understandable that in actual applications, the surfaces of the sides of the structural member and the top cover body 211 away from the shell 22 of the battery cell 20 are usually set as planes. Therefore, the surface of the side the structural member away from the shell 22 of the battery cell 20 is the upper surface of the structural member. Similarly, the surface of the side of the top cover body 211 away from the shell 22 of the battery cell 20 is the upper surface of the top cover body 211.

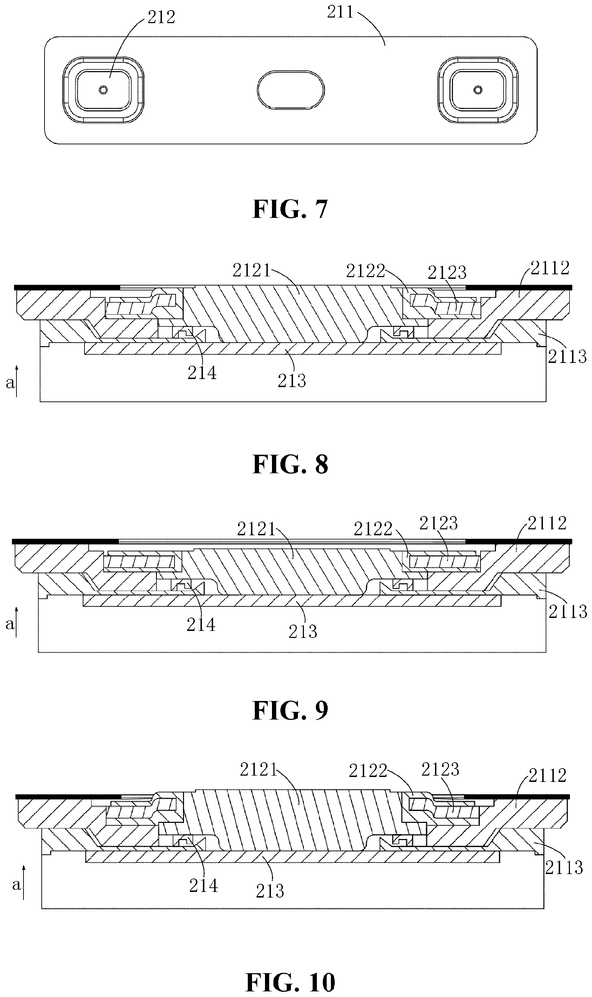

Referring to Fig. 7 and Fig. 8, compared with a top cover assembly in the related art in which a structural member protrudes too much from an upper surface of a top cover body 21, in the embodiments of the present application, when the upper surface of the structural member is flush with the upper surface of the top cover body 211, it is capable of eliminating the influence of the structural member on the overall thickness of the top cover assembly 21, and can more effectively utilize the space above the upper surface of the structural member, thereby improving the space utilization rate. In addition, by improving the spatial structure of the top cover assembly 21, it is capable of helping improve the utilization efficiency of the external space after the battery cells 20 are assembled into a battery, thereby improving the overall volumetric energy density of the battery. As shown in Fig. 9, when the upper surface of the structural member is lower than the upper surface of the top cover body 211, the space above the upper surface of the structural member can also be better utilized, thereby improving the space utilization. In addition, when the upper surface of the structural member is lower than the upper surface of the top cover body 211, an accommodating recess may be formed to further accommodate other external electrical connection structural members, which is conducive to assisting in improving the utilization efficiency of the external space after the battery cells 20 are assembled into a battery, thereby improving the overall volumetric energy density of the battery.

As shown in Fig. 10, when the upper surface of the structural member is higher than the upper surface of the top cover body 211, the height difference is controlled within a smaller preset range, so that the height of the structural member protruding from the upper surface of the top cover body 211 can be ignored, which is also capable of improving the utilization efficiency of the external space of the battery cell 20 equipped with the top cover assembly 21 after they are assembled into the battery. In summary, in the embodiments of the present application, when the top cover assembly 21, the shell 22, and the electrode assembly 23 together constitute a battery cell 20, the utilization rate of the space above the upper surface of the structural member is capable of being improved by improving the spatial structure of the top cover assembly 21, thereby assisting in improving the overall volumetric energy density of the battery after the battery cells 20 are assembled into the battery.

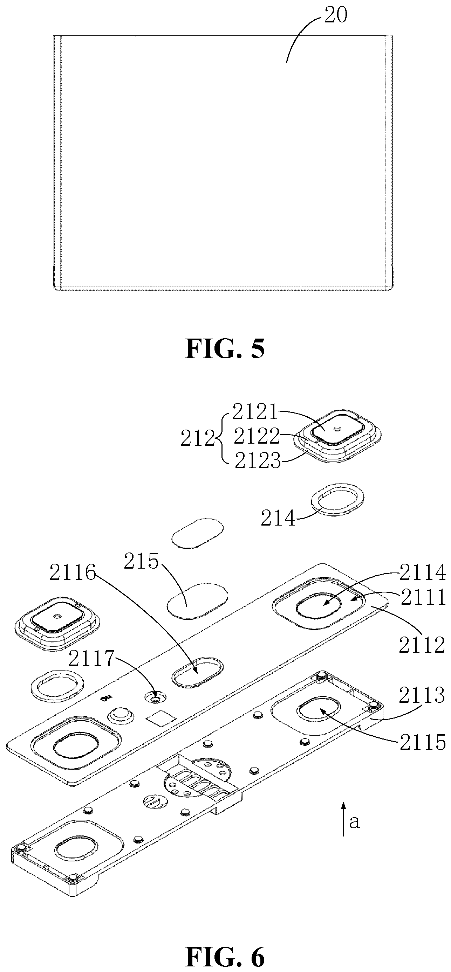

Referring to Fig. 6 again, according to some embodiments of the present application, an accommodating groove 2111 is opened on the top cover body 211. The structural member includes a terminal post assembling body 212. The terminal post assembling body 212 is accommodated in the accommodating groove 2111. In the thickness direction a of the top cover body 211, an upper surface of the terminal post assembling body 212 is flush with the upper surface of the top cover body 211, or the upper surface of the terminal post assembling body 212 is lower than the upper surface of the top cover body 211, or the upper surface of the terminal post assembling body 212 is higher than the upper surface of the top cover body 211 and a height difference is within a preset range.

It should be noted that one end of the terminal post assembling body 212 is configured to be connected to a busbar, and the other end can be connected to an external conductor or to the terminal post assembling body 212 on the top cover assembly 21 of another adjacent battery cell 20. When the other end of the terminal post assembling body 212 is connected to an external conductor, the terminal post assembling body 212 becomes an electrode terminal.

It is understandable that, since the battery cell 20 includes a positive electrode and a negative electrode, the terminal post assembling body 212 may include a positive electrode terminal post assembling body and a negative electrode terminal post assembling body, corresponding to the positive electrode and the negative electrode of the battery cell 20 respectively. The structures of the positive electrode terminal post assembling body and the negative electrode terminal post assembling body are the same, and therefore, for the convenience of description, the positive electrode terminal post assembling body and the negative electrode terminal post assembling body are collectively referred to as the terminal post assembling body 212 hereinafter. That is, the terminal post assembling body 212 may be a positive electrode terminal post assembling body or a negative electrode terminal post assembling body.

Correspondingly, in order to separately accommodate the positive electrode terminal post assembling body and the negative electrode terminal post assembling body, two accommodating grooves 2111 may be opened on the top cover body 211 to accommodate the positive electrode terminal post assembling body and the negative electrode terminal post assembling body in a one-to-one corresponding manner.

Furthermore, in order to allow the terminal post assembling body 212 to be more stably accommodated in the accommodating groove 2111, the inner contour of the accommodating groove 2111 matches the outer contour of the terminal post assembling body 212. Therefore, when the terminal post assembling body 212 is accommodated in the accommodating groove 2111, no gap is generated between the outer edge of the terminal post assembling body 212 and the groove inner wall of the accommodating groove 2111, so that the terminal post assembling body 212 can be more stably accommodated in the accommodating groove 2111.

Specifically, the terminal post assembling body 212 is accommodated in the accommodating groove 2111 so that in the thickness direction a of the top cover body 211, the upper surface of the terminal post assembling body 212 is flush with the upper surface of the top cover body 211 or lower than the upper surface of the top cover body 211, or the height difference of the terminal post assembling body 212 protruding from the upper surface of the top cover body 211 is controlled within a preset range, and therefore, by improving the spatial structure of the top cover assembly 21, when the top cover assembly 21, the shell 22, and the electrode assembly 23 together form a battery cell 20, the utilization rate of the space above the upper surface of the terminal post assembling body 212 is improved, thereby assisting in improving the overall volumetric energy density of the battery after the battery cells 20 are assembled into the battery.

According to some embodiments of the present application, when the upper surface of the terminal post assembling body 212 is flush with the upper surface of the top cover body 211 or lower than the upper surface of the top cover body 211, the height difference between the upper surface of the terminal post assembling body 212 and the upper surface of the top cover body 211 in the thickness direction of the top cover body 211 is -3 mm to 0 mm.

Therefore, the terminal post assembling body 212 is capable of sinking smoothly into the top cover body 211 without occupying too much space inside the top cover body 211.

According to some embodiments of the present application, the height difference between the upper surface of the terminal post assembling body 212 and the upper surface of the top cover body 211 in the thickness direction a of the top cover body 211 is -2 mm to 0 mm.

When the height difference between the upper surface of the terminal post assembling body 212 and the upper surface of the top cover body 211 is -2 mm to 0 mm, the height of the terminal post assembling body 212 is lower than the height of the top cover body 211 or is equal to the height of the top cover body 211. As a result, the terminal post assembling body 212 is capable of smoothly sinking into the top cover assembly 21, and when the top cover assembly 21, the shell 22, and the electrode assembly 23 together form the battery cell 20, the space above the upper surface of the terminal post assembling body 212 can be better utilized, thereby improving the space utilization. Moreover, the upper surface of the terminal post assembling body 212 is lower than the upper surface of the top cover body 211, so as to form an accommodating recess for accommodating other external electrical connection structural members, which is conducive to further assisting in improving the utilization efficiency of the external space after the battery cells 20 are assembled into a battery, thereby improving the overall volumetric energy density of the battery.

Of course, the height difference range between the upper surface of the terminal post assembling body 212 and the upper surface of the top cover body 211 is a preferred example. In actual production, the height difference between the upper surface of the terminal post assembling body 212 and the upper surface of the top cover body 211 can be selected according to actual conditions, which may not be repeated here.

According to some embodiments of the present application, the terminal post assembling body 212 includes a terminal post body 2121, a first insulating member 2122, and a connecting ring 2123. The first insulating member 2122 is arranged surrounding the outer periphery of the terminal post body 2121. The connecting ring 2123 is arranged surrounding the outer periphery of the first insulating member 2122 and connected between the first insulating member 2122 and a groove inner wall of the accommodating groove 2111.

It should be noted that the terminal post body 2121 refers to a component having one end connected to the busbar and the other end connected to an external conductor or a terminal post assembling body 212 on a top cover assembly 21 in an adjacent battery cell. The first insulating member 2122 and the connecting ring 2123 are sequentially arranged surrounding the outer periphery of the terminal post body 2121. When the terminal post assembling body 212 is accommodated in the accommodating groove 2111, the connecting ring 2123 is connected to the groove inner wall of the accommodating groove 2111. As a result, the terminal post assembling body 212 and the top cover body 211 are stably connected to form an integral structure.

Specifically, the top cover plate 2112 is usually made of a metal material, that is, the groove inner wall of the accommodating groove 2111 is usually made of a metal material, and therefore, in order to facilitate the connection between the connecting ring 2123 and the groove inner wall of the accommodating groove 2111, the material of the connecting ring 2123 is usually also set to a metal material. Therefore, the first insulating member 2122 is capable of isolating the connecting ring 2123 from the terminal post assembling body 212, thereby reducing the short circuit risk of the battery cell 20. For example, the first insulating member 2122 may be made of plastic, rubber, and the like.

Through the structural coordination between the terminal post body 2121, the first insulating member 2122, and the connecting ring 2123, on the one hand, the terminal post assembling body 212 is capable of being safely and stably arranged on the top cover body 211, and on the other hand, the space above the upper surface of the terminal post assembling body 212 is capable of being more effectively utilized, thereby improving the space utilization rate, which is beneficial to assist in improving the utilization efficiency of the external space after the battery cells 20 are assembled into the battery, thereby improving the overall volumetric energy density of the battery.

According to some embodiments of the present application, the connecting ring 2123 is connected to the groove inner wall of the accommodating groove 2111 by welding. The connecting ring 2123 and the groove inner wall 2111 of the accommodating groove are welded to form an integrated structure, so that the arrangement of the terminal post assembling body 212 in the accommodating groove 2111 is more stable.

According to some embodiments of the present application, the top cover body 211 includes a top cover plate 2112 and a second insulating member 2113 stacked in its thickness direction a, and the accommodating groove 2111 is opened on the top cover plate 2112. A first through hole 2114 is opened on a groove bottom wall of the accommodating groove 2111, and a second through hole 2115 in communication with the first through hole 2114 is opened on the second insulating member 2113. When the terminal post assembling body 212 is accommodated in the accommodating groove 2111, one end of the terminal post body 2121 sequentially passes through the first through hole 2114 and the second through hole 2115.

It should be noted that the top cover plate 2112 may be made of a material with a certain hardness and strength (such as aluminum alloy). Therefore, when the top cover plate 2112 covers the opening of the shell 22 of the battery cell 20, it is capable of protecting the battery cell from deformation when it is squeezed or collided, thereby improving the structural strength of the battery cell.

When the top cover assembly 21 is sealed and covered on the opening of the shell 22 of the battery cell 20, the second insulating member 2113 is arranged toward the interior of the shell 22. Therefore, the second insulating member 2113 is capable of isolating the electrical connection components in the shell 22 from the top cover plate 2112, thereby reducing the short circuit risk of the battery cell 20. For example, the second insulating member 2113 may be made of plastic, rubber, and the like.

Specifically, the accommodating groove 2111 on the top cover plate 2112 is capable of accommodating the terminal post assembling body 212, so that the terminal post assembling body 212 sinks into the inside of the top cover body 211, thereby reducing the overall thickness of the top cover assembly 21. In addition, when the top cover assembly 21 is sealed and covered on the opening of the shell 22 of the battery cell 20, the second insulating member 2113 is capable of isolating the electrical connection components in the shell 22 from the top cover plate 2112, thereby reducing the short circuit risk of the battery cell.

According to some embodiments of the present application, referring to Fig. 8, Fig. 9, and Fig. 10 again, the top cover assembly 21 further includes an adapter plate 213. The adapter plate 213 is arranged on the side of the second insulating member 2113 away from the top cover plate 2112. The adapter plate 213 is configured to connect the terminal post body 2121 and the electrode assembly.

Specifically, when the top cover assembly 21, the shell 22, and the electrode assembly 23 together form the battery cell 20, the top cover assembly 21 is sealed at the opening of the shell 22. The adapter plate 213 is arranged on the side of the second insulating member 2113 away from the top cover plate 2112, that is, the adapter plate 213 is arranged on a side of the second insulating member 2113 facing the interior of the shell 22. Thus, the adapter plate 213 can be connected between the electrode assembly and the terminal post body 2121 to form a current loop.

Furthermore, when the top cover plate 2112 and the second insulating member 2113 are stacked, the first through hole 2114 and the second through hole 2115 at least partially overlap, so that the first through hole 2114 is in communication with the second through hole 2115, and one end of the terminal post body 2121 is capable of passing through the first through hole 2114 and the second through hole 2115 in sequence and connecting to the adapter plate 213.

By arranging the adapter plate 213, the terminal post body 2121 is capable of being stably connected to the electrode assembly in the shell 22 of the battery cell 20. Therefore, in charging and discharging processes of the battery cell 20, the positive electrode active material and the negative electrode active material react with the electrolyte solution, thereby forming a stable current loop between the terminal post body 2121 and the electrode assembly.

According to some embodiments of the present application, the thickness of the adapter plate 213 is the same everywhere. That is, the adapter plate 213 has a first surface and a second surface in its thickness direction a. The first surface and the second surface are parallel to each other, and the distance is equal everywhere between the first surface and the second surface.

The terminal post assembling body 212 is arranged to sink into the top cover assembly 21 in the present application, and therefore, when the top cover assembly 21 is sealed at the opening of the shell 22, the distance between the top of the electrode assembly inside the shell 22 and the bottom of the terminal post body 2121 is small. Therefore, there is no need to arrange a protruding structure on the adapter plate 213, and a stable connection between the electrode assembly and the terminal post body 2121 is also capable of being achieved.

The structural setting of the above adapter plate 213 is not only capable of achieving a stable connection between the electrode assembly and the terminal post body 2121, but also capable of reducing the space occupied by the adapter plate 213 inside the battery cell 20, thereby improving the space utilization inside the battery cell 20.

According to some embodiments of the present application, the top cover assembly 21 further includes a first sealing member 214, and the first sealing member 214 is arranged between the terminal post assembling body 212 and the second insulating member 2113 in the thickness direction a of the top cover body 211.

On the one hand, the first sealing member 214 is filled in a gap between the terminal post assembling body 212 and the second insulating member 2113. When the top cover assembly 21 covers the opening of the shell 22 of the battery cell 20, the first sealing member 214 is capable of improving the sealing performance inside the shell 22, so that the electrode assembly is capable of being more safely sealed in the shell 22.

On the other hand, the first sealing member 214 is filled between the terminal post assembling body 212 and the second insulating member 2113 in the thickness direction a of the top cover body 211, thereby providing stable support for the terminal post assembling body 212 in the thickness direction a of the top cover body 211 and improving the stability of the terminal post assembling body 212 on the top cover body 211.

Specifically, in order to further improve the sealing effect of the first sealing member 214 between the terminal post assembling body 212 and the second insulating member 2113, the first sealing member 214 may be configured as a sealing ring, which is arranged between the terminal post assembling body 212 and the second insulating member 2113 in a surrounding manner.

According to some embodiments of the present application, the first sealing member 214 is an elastic sealing member.

When the first sealing member 214 is elastic, the first sealing member 214 can be interference-fitted between the terminal post assembling body 212 and the second insulating member 2113, thereby improving the sealing performance between the terminal post assembling body 212 and the second insulating member 2113. For example, the first sealing member 214 may be configured as a structure made of silicone or other elastic materials.

According to some embodiments of the present application, an exhaust vent 2116 is further opened on the top cover body 211, and the structural member further includes a pressure relief member 215, and the pressure relief member 215 is sealed in the exhaust vent 2116. In the thickness direction a of the top cover body 211, an upper surface of the pressure relief member 215 is flush with the upper surface of the top cover body 211, or the upper surface of the pressure relief member 215 is lower than the upper surface of the top cover body 211, or the upper surface of the pressure relief member 215 is higher than the upper surface of the top cover body 211 and a height difference is within a preset range.

It should be noted that when thermal runaway or other chemical reactions occur inside the battery cell 20 due to excessive temperature, a large amount of gas is generated inside the battery cell 20, causing the pressure inside the battery cell 20 to increase extremely rapidly. At this time, if the internal pressure of the battery cell 20 cannot be discharged in time, the battery cell 20 may explode.

Based on this, it is necessary to open the exhaust vent 2116 on the top cover body 211, and arrange the pressure relief member 215 in the exhaust vent 2116 in a sealed manner. When the battery cell 20 works normally, the pressure relief member 215 is capable of ensuring the sealing performance inside the battery cell 20. When the internal pressure of the battery cell 20 is too high, the gas inside the battery cell 20 is capable of breaking open the pressure relief member 215, thereby achieving pressure relief.

Through the above structure, the pressure relief member 215 is accommodated in the exhaust vent 2116 so that in the thickness direction a of the top cover body 211, the upper surface of the pressure relief member 215 is flush with the upper surface of the top cover body 211 or lower than the upper surface of the top cover body 211, or the height difference of the pressure relief member 215 protruding from the upper surface of the top cover body 211 is controlled within a preset range to avoid the arrangement of the pressure relief member 215 from affecting the overall height of the top cover assembly 21, and therefore, the space saved above the upper surface of the pressure relief member 215 is capable of being more effectively utilized, thereby improving the space utilization, which is conducive to assisting in improving the utilization efficiency of the external space after the battery cells 20 are assembled into the battery, thereby improving the overall volumetric energy density of the battery.

According to some embodiments of the present application, a liquid injection hole 2117 is further opened on the top cover body 211, the structural member further includes a second sealing member (not shown in the figure), and the second sealing member is sealed in the liquid injection hole 2117. In the thickness direction a of the top cover body 211, an upper surface of the second sealing member is flush with the upper surface of the top cover body 211, or the upper surface of the second sealing member is lower than the upper surface of the top cover body 211, or the upper surface of the second sealing member is higher than the upper surface of the top cover body 211 and a height difference is within a preset range.

It should be noted that after the battery cell 20 is assembled, it is usually necessary to inject the electrolyte solution into the battery cell 20. Therefore, the liquid injection hole 2117 is opened on the top cover body 211 to facilitate the injection of electrolyte solution into the battery cell 20. After the electrolyte solution is injected, the liquid injection hole 2117 is sealed by the second sealing member to ensure the sealing performance inside the battery cell 20.

Through the above structure, the second sealing member is completely accommodated in the liquid injection hole 2117 so that in the thickness direction a of the top cover body 211, the upper surface of the second sealing member is flush with the upper surface of the top cover body 211 or lower than the upper surface of the top cover body 211, or the height difference of the second sealing member protruding from the upper surface of the top cover body 211 is controlled within a preset range to avoid the arrangement of the second sealing member from affecting the overall thickness of the top cover assembly 21, and therefore, the space saved above the upper surface of the second sealing member is capable of being more effectively utilized, thereby improving the space utilization, which is conducive to assisting in improving the utilization efficiency of the external space after the battery cells 20 are assembled into the battery, thereby improving the overall volumetric energy density of the battery. As for the top cover assembly 21 that is simultaneously provided with a terminal post assembling body 212, a pressure relief member 215, and a second sealing member, the above arrangement can more effectively and comprehensively compress the thicknesses of different positions of the top cover assembly 21, thereby improving the efficiency of utilizing the external space after the battery cells 20 are assembled into the battery, and improving the overall volumetric energy density of the battery.

According to some embodiments of the present application, the preset range is 0 mm to 3 mm.

It should be noted that, currently, the structural member arranged on the top cover body 211, such as the terminal post assembling body 212, is usually arranged to protrude from the upper surface of the top cover body 211, and the protruding height is greater than 4 mm.

Based on this, in some embodiments of the present application, when the upper surface of the structural member is higher than the upper surface of the top cover body 211, the height difference is controlled between 0 mm and 3 mm, which is capable of reducing the space occupied by the structural member and improving the utilization of the space above the upper surface of the structural member.

According to some embodiments of the present application, the preset range is 0 mm to 2 mm.

Further limiting the preset range to within 2 mm can further reduce the space occupied by the structural member, thereby further improving the utilization of the space above the upper surface of the structural member.

In addition, in some embodiments, the structural members are all accessories such as the terminal post assembling body and an explosion-proof valve on the top cover body 211. All the accessories designed on the top cover body 211 are designed to have upper surfaces lower than or flush with the upper surface of the top cover body 211 or higher than the upper surface of the top cover body 211 by a preset height, so that the upper surfaces of all the accessories slightly protrude from the upper surface of the top cover body 211, which can more comprehensively improve the space utilization. It is conceivable that, in some embodiments, the structural member may be only the terminal post assembling body on the top cover body 211, or the explosion-proof valve on the top cover body 211, or the like. By making the above improvements to a single terminal post assembling body or a single explosion-proof valve, the utilization of the space above the upper surface of the single terminal post assembling body or the utilization of the space above the explosion-proof valve can be correspondingly improved.

Based on the same concept as the above top cover assembly 21, the present application further provides a battery cell 20, and the battery cell 20 includes a shell 22, the above top cover assembly 21, and an electrode assembly. The shell 22 has an opening, and the top cover assembly 21 is arranged at the opening in a sealed manner. The electrode assembly is accommodated in the shell 22 and connected to the top cover assembly 21.

Specifically, the electrode assembly is placed in the shell 22 from the opening, and then the top cover assembly 21 is arranged at the opening in a sealed manner, and the second insulating member 2113 in the top cover assembly 21 is arranged toward the interior of the shell 22. Thus, the electrode assembly is capable of being connected to the adapter plate 213 in the top cover assembly 21. That is, one end of the adapter plate 213 is connected to the electrode assembly, and the other end is connected to the terminal post body 2121, so that a current loop is formed between the terminal post body 2121 and the electrode assembly, and the battery cell 20 is capable of being charged and discharged smoothly.

When the top cover assembly 21 is applied to the battery cell 20, since the structural member such as the terminal post assembling body 212 on the top cover assembly 21 is arranged inside the top cover body 211 by sinking, the utilization of the space above the upper surface of the structural member is improved. When the top cover assembly 21, the shell 22, and the electrode assembly together form the battery cell 20, the overall height of the battery cell 20 can be reduced by 2 mm to 5 mm.

Based on the conception the same as that of the above battery cell 20, the present application further provides a battery 100, including the above battery cell 20.

The height of the battery cell 20 is reduced by 2 mm to 5 mm, so that the battery cell 20 occupies less space inside the battery 100, thereby improving the space utilization inside the battery 100, and increasing the volumetric energy density of the battery 100 by about 1.5% to 5%.

Based on the conception the same as that of the above battery 100, the present application further provides an electrical apparatus, including the above battery 100.

According to some embodiments of the present application, the present application provides a top cover assembly 21, which completely accommodates the terminal post assembling body 212 in the accommodating groove 2111 on the top cover plate 2112, and is fixedly connected to the groove inner wall of the accommodating groove 2111 through the connecting ring 2123 in the terminal post assembling body 212, so that the terminal post assembling body 212 is stably arranged in the accommodating groove 2111. In the thickness direction a of the top cover body 211, the upper surface of the terminal post assembling body 212 is flush with the upper surface of the top cover body 211, or lower than the upper surface of the top cover body 211, or the height of the terminal post assembling body 212 protruding from the upper surface of the top cover body 211 is controlled within 2 mm. Therefore, this is conducive to improving the utilization efficiency of the external space after the battery cells 20 are assembled into a battery, so that other external structural members can be arranged using the saved space, thereby improving the overall volumetric energy density of the battery.

Furthermore, since the terminal post assembling body 212 is arranged inside the top cover body 211 in a sinking manner, when the top cover assembly 21 is arranged at the opening of the shell 22 in a sealed manner, the distance between the terminal post assembling body 212 and the electrode assembly in the shell 22 is reduced. Therefore, when the terminal post assembling body 212 and the electrode assembly are connected via the adapter plate 213, the space occupied by the adapter plate 213 is capable of being reduced, thereby further improving the volumetric energy density of the battery cell 20.

Finally, it should be noted that, the above embodiments are merely used for describing the technical solution of the present application, instead of limiting the present application. Although the present application is described in detail with reference to the foregoing embodiments, those of ordinary skill in the art should understand that they can still make modifications on the technical solution recorded in the above embodiments, or perform equivalent replacements on all or a part of technical features thereof; these modifications or replacements are not intended to make the essences of the corresponding technical solutions depart from the scope of the technical solutions of the embodiments of the present application, and should all be covered in the scope of the claims and specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A top cover assembly, the top cover assembly comprising:
a top cover body; and
a structural member arranged on the top cover body;
wherein in a thickness direction of the top cover body, an upper surface of the structural member is flush with an upper surface of the top cover body, or the upper surface of the structural member is lower than the upper surface of the top cover body, or the upper surface of the structural member is higher than the upper surface of the top cover body and a height difference is within a preset range.

2. The top cover assembly according to claim 1, wherein an accommodating groove is opened on the top cover body, and the structural member comprises a terminal post assembling body, and the terminal post assembling body is accommodated in the accommodating groove;
wherein in the thickness direction of the top cover body, an upper surface of the terminal post assembling body is flush with the upper surface of the top cover body, or the upper surface of the terminal post assembling body is lower than the upper surface of the top cover body, or the upper surface of the terminal post assembling body is higher than the upper surface of the top cover body and a height difference is within the preset range.

3. The top cover assembly according to claim 2, wherein when the upper surface of the terminal post assembling body is flush with the upper surface of the top cover body or lower than the upper surface of the top cover body, the height difference between the upper surface of the terminal post assembling body and the upper surface of the top cover body in the thickness direction of the top cover body is -3 mm to 0 mm.

4. The top cover assembly according to claim 3, wherein the height difference between the upper surface of the terminal post assembling body and the upper surface of the top cover body in the thickness direction of the top cover body is -2 mm to 0 mm.

5. The top cover assembly according to any one of claims 2 to 4, wherein the terminal post assembling body comprises:
a terminal post body;
a first insulating member, the first insulating member being arranged surrounding the outer periphery of the terminal post body; and
a connecting ring, the connecting ring being arranged surrounding the outer periphery of the first insulating member and connected between the first insulating member and a groove inner wall of the accommodating groove.

6. The top cover assembly according to claim 5, wherein the connecting ring is connected to the groove inner wall of the accommodating groove by welding.

7. The top cover assembly according to claim 5 or 6, wherein the top cover body comprises a top cover plate and a second insulating member stacked in its own thickness direction, the accommodating groove is opened on the top cover plate, and a first through hole is opened on a groove bottom wall of the accommodating groove; a second through hole in communication with the first through hole is opened on the second insulating member, and when the terminal post body is accommodated in the accommodating groove, one end of the terminal post body sequentially passes through the first through hole and the second through hole.

8. The top cover assembly according to claim 7, wherein the top cover assembly further comprises an adapter plate, the adapter plate is arranged on a side of the second insulating member away from the top cover plate, and the adapter plate is configured to connect the terminal post body and the electrode assembly.

9. The top cover assembly according to claim 8, wherein the thickness of the adapter plate is the same everywhere.

10. The top cover assembly according to any one of claim 7 to 9, wherein the top cover assembly further comprises a first sealing member, and the first sealing member is arranged between the terminal post assembling body and the second insulating member in the thickness direction of the top cover body.

11. The top cover assembly according to claim 10, wherein the first sealing member is an elastic sealing member.

12. The top cover assembly according to any one of claims 1 to 11, wherein an exhaust vent is further opened on the top cover body, and the structural member further comprises a pressure relief member, and the pressure relief member is sealed in the exhaust vent;
wherein in the thickness direction of the top cover body, an upper surface of the pressure relief member is flush with the upper surface of the top cover body, or the upper surface of the pressure relief member is lower than the upper surface of the top cover body, or the upper surface of the pressure relief member is higher than the upper surface of the top cover body and a height difference is within the preset range.

13. The top cover assembly according to any one of claims 1 to 12, wherein a liquid injection hole is further opened on the top cover body, the structural member further comprises a second sealing member, and the second sealing member is sealed in the liquid injection hole;
wherein in the thickness direction of the top cover body, an upper surface of the second sealing member is flush with the upper surface of the top cover body, or the upper surface of the second sealing member is lower than the upper surface of the top cover body, or the upper surface of the second sealing member is higher than the upper surface of the top cover body and a height difference is within the preset range.

14. The top cover assembly according to any one of claims 1 to 13, wherein the preset range is 0 mm to 3 mm.

15. The top cover assembly according to claim 14, wherein the preset range is 0 mm to 2 mm.

16. A battery cell , comprising:
a shell having an opening;
the top cover assembly according to any one of claims 1 to 15, arranged at the opening in a sealed manner; and
an electrode assembly accommodated in the shell and connected to the top cover assembly.

17. A battery, comprising the battery cell according to claim 16.

18. An electrical apparatus, comprising the battery according to claim 17.
